**Europäisches Patentamt**

**European Patent Office**

**Office européen des brevets**

(19)

(11) Veröffentlichungsnummer : **0 227 944 B1**

# EUROPÄISCHE PATENTSCHRIFT

(12)

(45) Veröffentlichungstag der Patentschrift :
**23.01.91 Patentblatt 91/04**

(51) Int. Cl.⁵ : **A61C 7/00**

(21) Anmeldenummer : **86116198.2**

(22) Anmeldetag : **21.11.86**

(54) Orthodonte Vorrichtung.

(30) Priorität : 23.11.85 DE 3541506

(43) Veröffentlichungstag der Anmeldung :
**08.07.87 Patentblatt 87/28**

(45) Bekanntmachung des Hinweises auf die
Patenterteilung :
**23.01.91 Patentblatt 91/04**

(84) Benannte Vertragsstaaten :
**AT BE CH DE ES FR GB IT LI SE**

(56) Entgegenhaltungen :
DE-A- 2 554 145
DE-A- 2 716 341

(56) Entgegenhaltungen :
DE-A- 2 742 896
FR-A- 2 537 866
US-A- 4 349 334
US-A- 4 531 911

(73) Patentinhaber : **HARODENT-KFO
Dental-Vertrieb GmbH
Hamburger Strasse 18
D-4504 Georgsmarienhütte (DE)**

(72) Erfinder : **Haarmann, Bodo
Mühlenweg 24
D-4502 Bad Rothenfelde (DE)**

(74) Vertreter : **Busse & Busse Patentanwälte
Postfach 1226 Grosshandelsring 6
D-4500 Osnabrück (DE)**

EP 0 227 944 B1

**Beschreibung**

Die Erfindung bezieht sich auf eine orthodonte Vorrichtung in Gestalt eines Brackets gemäß dem Oberbegriff des Patentanspruchs 1.

Bei einem bekannten Bracket dieser Art (US-A-4 531 911) sind die Flügel einzeln formgefräste Teile oder nachbearbeitete Abschnitte eines durch Formfräsen vorgeformten Drahtstranges mit sich einseitig erweiternden Drahtdurchgangsöffnungen. Zwischen den Flügeln ist ein Mittelstück mit einem Präzision-Bracketschlitz angeordnet, das ebenso wie die Flügel auf der Basisplatte aufgeschweißt oder ebenso wie die Flügel mit der Basisplatte integral ausgeführt sein kann.

Es sind ferner Brackets bekannt (DE-A-27 16 341), die aus einem integralen Formteil bestehen, das durch Abteilen von einem durch Formfräsen geformten Drahtstrang gebildet ist und je nach Ausbildung des Brackets noch Nachfräsarbeiten unterworfen wird, z.B. bei Schräglage des Bracketschlitzes.

Es sind ferner als integrales Stück ausgeführte Brackets bekannt (US-A-4 322 206, US-A-4 349 334), die aus einem für jedes Bracket einzeln vorgeformten Gußrohling gebildet sind. Die Endformgebung derartiger Gußbrackets erfolgt durch Nacharbeiten, z.B. durch Nachfräsen von gruppenweise in Paletten eingesetzten Gußrohlinge.

Brackets der vorstehenden Art sind teuer und aus Gründen der Begrenzung der Herstellungskosten nur jeweils in einer größeren Stückzahl gleichförmiger Brackets herstellbar. Vorprofilierte Drahtstränge als Ausgangsmaterial für die Herstellung bedingen eine ähnlich starke Formbindung wie dies bei Gießformen für die Herstellung von Grundformen von Gußrohlingen der Fall ist. Bei Gußbrackets werden ca. 60 verschiedene Gießformen für Gußrohlinge benötigt, aus denen dann die mehr als 100 verschiedenen Bracketformen durch nachbearbeitende Abwandlung hergestellt werden können.

Zur Befestigung der Brackets auf der Oberseite der Zähne ist es bekannt, diese nach ihrer Fertigstellung an der Unterseite ihrer Basisplatte mit einer gesonderten Klebebasis zu versehen. Diese kann aus einer Metallplatte bestehen, welche mit der Unterseite der Basisplatte des Brackets verschweißt wird und ihrerseits unterseitig mit einem Metallnetz zur Verbesserung einer Haftverbindung versehen ist (DE-A-27 16 341). Statt dessen kann die als Klebebasis Verwendung findende Metallplatte auch mit durch Ätzen gebildeten Sacklöchern in ihrer Unterseite versehen sein (DE-B-29 10 070), die hinterschneidungsfreie Aufnahmen für Klebmittel bilden.

Ferner ist es zur Bracketbefestigung bekannt, die Basisplatte auf ein zu Befestigungszwecken dienendes Metallband aufzuschweißen oder für eine direkte Verbindung mit der Zahnoberfläche zu präparieren (US-A-4 531 911). Bei gegossenen Brackets kann die Basisplatte des Brackets unterseitig ohne weiteres zur Verklebung mit einer Zahnoberfläche benutzt werden (US-A-4 349 334), die zu diesem Zweck beim Gießen mit flachen rechtwinklig begrenzten Ausnehmungen versehen worden sind.

Derartige Vorkehrungen an den Brackets für eine Bracketbefestigung sind ebenfalls sehr aufwendig. Ferner läßt die Verteilung der Haftkräfte sowie die Festigkeit der Klebebindung vielfach zu wünschen übrig.

Der Erfindung liegt die Aufgabe zugrunde, eine orthodonte Vorrichtung in Gestalt eines Brackets zu schaffen, die besonders einfach und daher preisgünstig herstellbar ist, einen weiten Spielraum bei der Formgestaltung beläßt und ohne gesonderte Klebebasis auskommt.

Die Erfindung löst diese Aufgabe mit den Merkmalen des Patentanspruchs 1. Hinsichtlich wesentlicher weiterer Ausgestaltungen wird auf die Patentansprüche 2 bis 10 verwiesen.

Die Erfindung schafft eine orthodonte Vorrichtung, bei der die unterschiedlichen Gestaltungsformen der Brackets, wie sie für die verschiedenen kieferorthopädischen Maßnahmen benötigt werden, auf einfache Weise durch Zusammensetzen und Verbinden vorgeformter Einzelteile erstellt werden können, die ihrerseits einfach und preisgünstig vorfertigbar und für ein Zusammenfügen bereitstellbar sind. Die Basisplatte bildet dabei unmittelbar selbst eine Klebebasis, die eine besonders feste Klebverbindung bei günstiger Verteilung der Haftkräfte über ihre Unterseite erbringt.

Zahlreiche weitere Einzelheiten und Vorteile ergeben sich aus der nachfolgenden Beschreibung und der Zeichnung, in der verschiedene Ausführungsbeispiele des Gegenstands der Erfindung schematisch näher veranschaulicht sind. In der Zeichnung zeigen:

Fig. 1 eine Draufsicht auf ein erfindungsgemäßes Bracket mit anguliertem Bracketschlitz,

Fig. 2 eine Draufsicht auf ein Bracket abgewandelter Formgestalt,

Fig. 3-6 Ansichten verschiedener Standard-Bracket-Profile in Blickrichtung parallel zum Bracketschlitz, und

Fig. 7-9 abgebrochene Schnittdarstellungen etwa nach der Linie A-B in Fig. 1 zur Veranschaulichung unterschiedlicher Gestaltungen der Retentionen bildenden Ausnehmungen in einer Basisplatte nach der Erfindung.

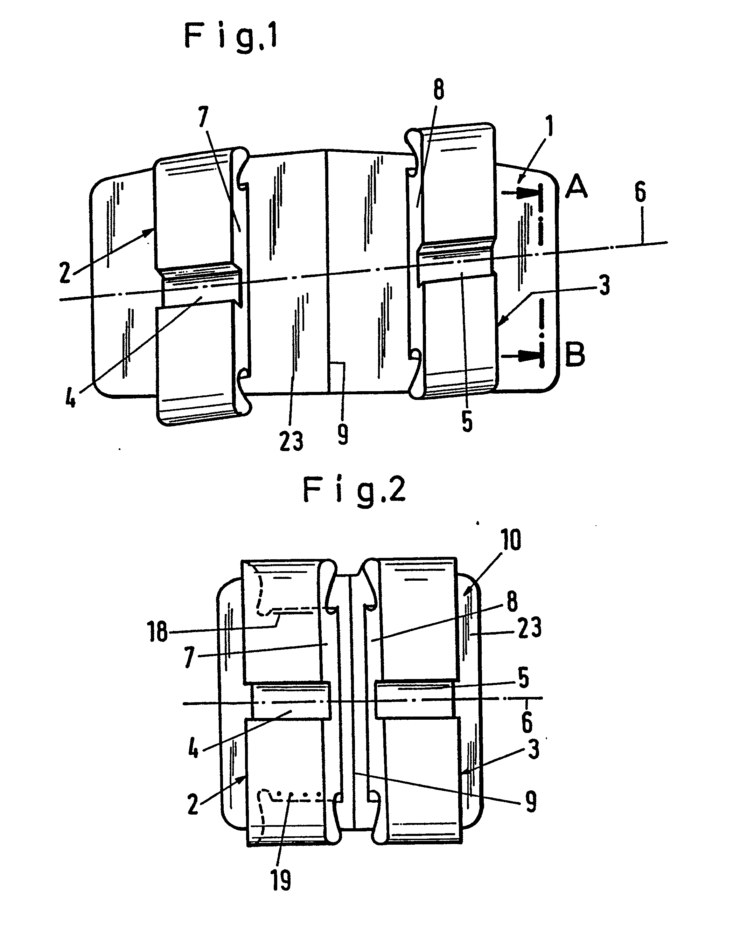

Die in Fig. 1 veranschaulichte orthodonte Vorrichtung in Gestalt eines Brackets umfaßt eine Basisplatte 1 sowie auf dieser angeordnete Flügel 2,3. Die Basisplatte 1 besteht ebenso wie die Flügel 2,3 aus Metall, insbesondere rostfreiem Stahl. Die Basisplatte 1 ist ein fertig gesondert vorgeformtes Einzelteil, das zahnspezifisch geformt, z.B. gewölbt, sein kann und aus einer Platine ausgeschnitten oder von einem Band abgeschnitten, entgratet und poliert ist.

Auf der geschlossenflächigen, gewölbten Oberseite der Basisplatte 1 sind die Flügel 2,3 aufgeschweißt, und zwar bei dem Bracket nach Fig. 1 in einem gegenseitigen Parallelversatz, durch den von den Schlitzen 4,5 der Flügel 2, 3 ein angulierter Bracketschlitz gebildet wird, dessen Angulation durch die strichpunktierte Bracketschlitzebene 6 versinnbildlicht ist. Die Begrenzungsflächen der Schlitze 4,5 sind dabei zu den Längsseitenflächen 7 bzw. 8 senkrecht ausgerichtet, so daß angulierte Bracketschlitze keine Sonderflügelformen erfordern, sondern durch entsprechende Anordnung der Flügel 2,3 auf ihrer Basisplatte 1 erzeugt werden können.

Dies verdeutlicht die Fig. 2, bei der gleiche Flügel 2,3 auf einer Basisplatte 10 verkleinerter Ausführung derart angeordnet sind, daß die Schlitzebene 6 senkrecht zur Mittenmarkierung 9 der Basisplatte 10 verläuft.

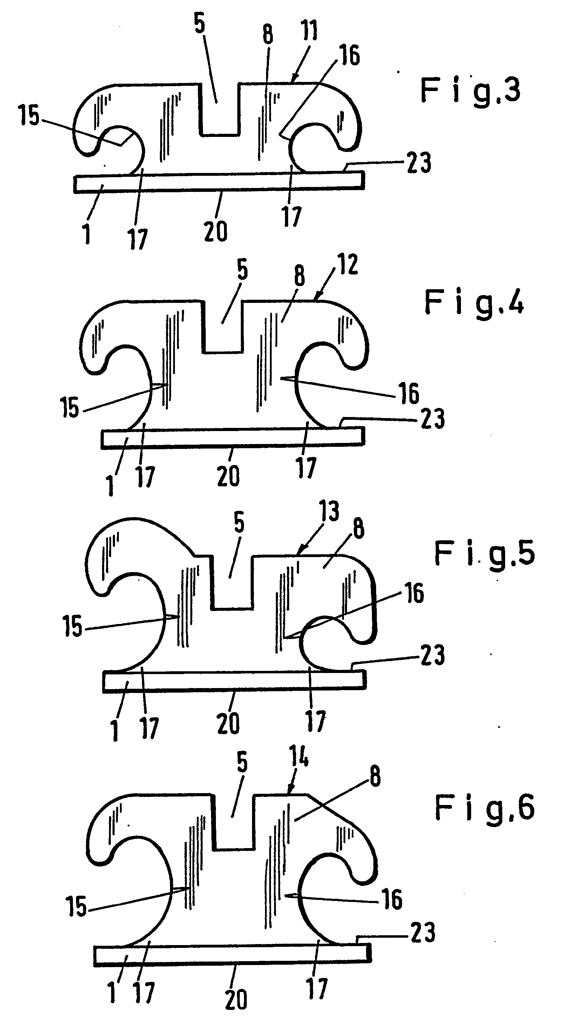

Die Flügel 2, 3 sind ebenso wie die Flügel 11, 12, 13, 14 in den Fig. 3 bis 6 von aus einer Platine mittels einer Laserschneidvorrichtung einzeln gleich in Endform ausgeschnittenen Formteilen gebildet, die nach ihrem Ausschneiden durch die zweckmäßig programmgesteuerte Laserschneidvorrichtung lediglich noch entgratet und poliert werden, bevor sie dann mittels einer Setz- und Haltevorrichtung auf ihrer Basisplatte 1 aufgesetzt werden, um nachfolgend durch einen Schweißvorgang, insbesondere einen Laserschweißvorgang, mit der Basisplatte 1 verbunden zu werden. Durch den Schneidvorgang wird die gesamte, in den Fig. 3-6 jeweils für verschiedene Formen veranschaulichte Kontur gebildet, wobei die Stirnflächen 15, 16 der Flügel 2, 3 bzw. 11 bis 14 eine nach innen gewölbte Ausrundung aufweisen und jeweils in einem spitzwinkligen Fußbereich 17 auslaufen, in denen bzw. entlang denen die Verschweißung mit der Basisplatte 1 bzw. 10 erfolgt. Bevorzugt sind die Flügel 2, 3 bzw. 11 bis 14 und die Basisplatte 1 bzw. 10 in schweißmittellosen Schmelzschweißbereichen miteinander verbunden, die in Fig. 2 für den Flügel 2 durch die Linie 18 bzw. die Punkte 19 versinnbildlicht sind. Bevorzugt werden die Schmelzschweißbereiche durch einen Laserschweißvorgang gebildet, der scharf konturierte, besonders präzise Schmelzschweißverbindungen schafft. Gestalt und Größe der Schmelzschweißbereiche richtet sich nach den jeweiligen Gegebenheiten, wobei im Einzelfall ein einzelner Schmelzschweißpunkt im Bereich jeder Stirnfläche 15, 16 für die Erstellung einer hinreichend festen Verbindung ausreichen kann.

Die Basisplatte 1 bzw. 10 ist unmittelbar selbst als Haftunterlage bzw. Klebebasis ausgebildet und hierzu mit über ihre Unterseite 20 verteilt angeordneten, zu dieser hin offenen, hinterschnittenen Ausnehmungen 21 bzw. 22 versehen. Die Ausnehmungen 21, 22 weisen die Form eines Kreiskegels auf, dessen Spitze der Oberseite 23 der Basisplatte 1 bzw. 10 zugewandt und deren Mittelachse mit der Unterseite 20 der Basisplatte 1 bzw. 10 einen spitzen Neigungswinkel 24 bzw. 25 einschließt. Die Größe der Neigungswinkel 24, 25 liegt bevorzugt im Bereich von 40-60° und beträgt insbesondere 50°. Pro cm² Plattenfläche sind in der Basisplatte 1 bzw. 10 etwa 80-120 Ausnehmungen 21 bzw. 22 angeordnet, und die Ausnehmungen 21, 22 sind vorzugsweise durch Laserbohren hergestellt. Die Ausnehmungen 21 bzw. 22 erstrecken sich über 60-90%, insbesondere 75% der Dicke der Basisplatte 1 bzw. 10, die bei etwa 0,3 mm liegen kann. In Richtung ihrer Mittelachsen haben dabei die Ausnehmungen 21 bzw. 22 eine Länge von etwa 0,3 mm.

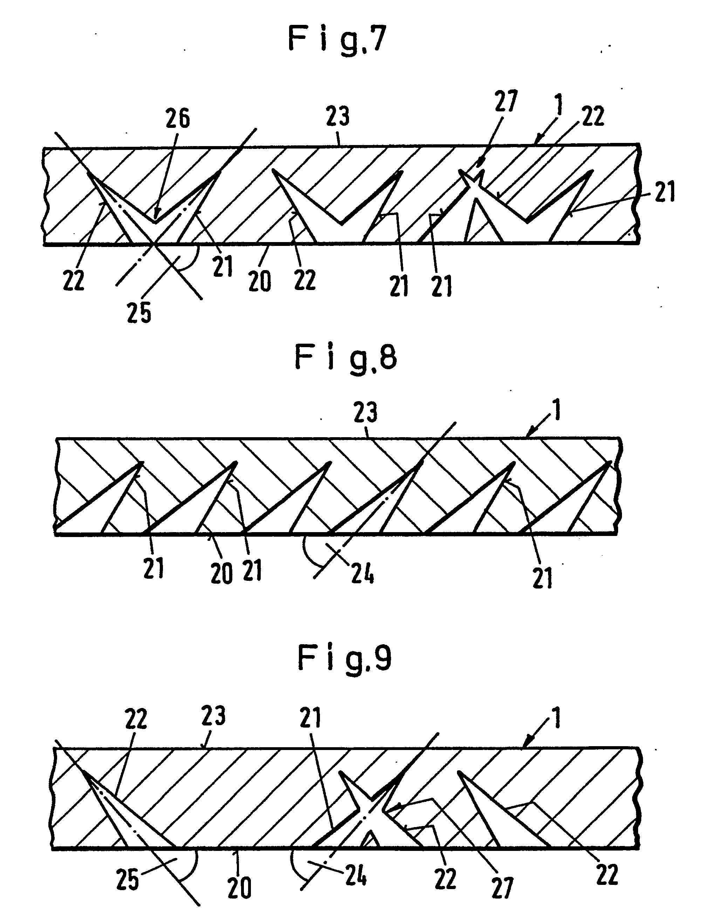

Sämtliche Ausnehmungen können, wie dies für die Ausnehmungen 21 in Fig. 8 veranschaulicht ist, eine einheitliche Ausrichtung aufweisen, z.B. wie in Fig. 8 nach rechts geneigt sein. Jedoch können die Ausnehmungen 21 bzw. 22 auch gruppenweise unterschiedlich ausgerichtet sein, wie dies die verschiedenen Darstellungen in den Fig. 7 bzw. 9 verdeutlichen. Wie den Figuren 7 und 9 entnommen werden kann, können zwei oder mehr Ausnehmungen 21 bzw. 22 zu einer einander verschneidenden Gruppe 26, 27 zusammengefaßt sein, wobei bei der Gruppe 26 der Schnittpunkt der Mittelachsen einander verschneidender Ausnehmungen 21, 22 in der Ebene der Unterseite 20 der Basisplatte 1 liegt, während bei den Gruppen 27 der Schnittpunkt der Mittelachsen einander verschneidener Ausnehmungen 21 bzw. 22 in der Nähe der Kegelspitzen gelegen ist. Dabei können die Verschneidungen so gelegt sein, daß sämtliche Ausnehmungen innerhalb der Basisplatte 1 bzw. 10 untereinander vernetzt sind.

Dies erleichtert eine Befüllung der Ausnehmungen mit einem Klebmittel, das zur direkten Haftvermittlung der Basisplatte auf der Oberfläche eines Zahns eingebracht wird und nach Aushärten das Bracket fest mit dem Zahn verbindet, wobei die Ausnehmungen 21, 22 infolge ihrer starken Hinterschneidung sichere Retentionen bilden.

Die Basisplatte 1 bzw. 10 in ihrer Ausgestaltung als Haftunterlage bzw. Klebebasis kann auch in Verbindung mit anderen Bracketkonstruktionen Anwendung finden und dort beispielsweise die Folienschicht und die Netzschicht ersetzen.

**Ansprüche**

1. Orthodonte Vorrichtung in Gestalt eines Brackets mit Flügeln (2 ; 3 ; 11 ; 12 ; 13 ; 14), die als gesonderte Formteile ausgebildet und auf eine ihrerseits ein gesondert vorgeformtes Einzelteil bildende Basisplatte (1 ; 10) aufgeschweißt sind, **dadurch gekennzeichnet,** daß die Flügel (2 ; 3 ; 11 ; 12 ; 13 ; 14) aus einer Platine mittels einer Laserschneidvorrichtung einzeln in Endform ausgeschnittene Formteile bilden und mit der Basisplatte (1 ; 10) in schweißmittellosen Schmelzschweißbereichen (18 ; 19), insbesondere -punkten, verbunden sind, die Basisplatte (1 ; 10) unmittelbar selbst als Klebebasis ausgebildet und hierzu mit über ihre Unterseite verteilt angeordneten, zu ihrer Unterseite hin offenen, hinterschnittenen, von Laserstrahlbohrungen gebildeten Ausnehmungen (21 ; 22) versehen ist, welche die Form eines Kreiskegels aufweisen, dessen Spitze der Oberseite (23) der Basisplatte (1 ; 10) zugewandt ist und deren Mittelachse mit der Unterseite der Basisplatte (1 ; 10) einen spitzen Neigungswinkel (24 ; 25) einschließt, wobei die Ausnehmungen (21 ; 22) gruppenweise unterschiedlich ausgerichtet sind.

2. Orthodonte Vorrichtung nach Anspruch 1, **dadurch gekennzeichnet**, daß die senkrecht zu den Längsseitenflächen (7, 8) verlaufenden Stirnflächen (15, 16) des Flügels (2 ; 3 ; 11 ; 12 ; 13 ; 14) eine nach innen gewölbte, nach außen hin offene Ausrundung aufweisen und in einem zur Unterseite des Flügels spitzwinkligen Fußbereich (17) auslaufen.

3. Orthodonte Vorrichtung nach Anspruch 2, **dadurch gekennzeichnet**, daß die Flügel (2 ; 3 ; 11 ; 12 ; 13 ; 14) in ihren Fußbereichen (17) mit der Basisplatte (1 ; 10) verschweißt sind.

4. Orthodonte Vorrichtung nach einem der Ansprüche 1 bis 3, **dadurch gekennzeichnet**, daß die Flügel (2 ; 3 ; 11 ; 12 ; 13 ; 14) und die Basisplatte (1 ; 10) in durch einen Laserschweißvorgang gebildeten Schmelzschweißbereichen (18 ; 19) verbunden sind.

5. Orthodonte Vorrichtung nach einem der Ansprüche 1 bis 4, **dadurch gekennzeichnet**, daß die Neigungswinkel (24 ; 25) der Mittelachsen der Ausnehmungen (21 ; 22) 40-60°, insbesondere 50°, betragen.

6. Orthodonte Vorrichtung nach einem der Ansprüche 1 bis 5, **dadurch gekennzeichnet**, daß etwa 80-120 Ausnehmungen (21 ; 22) pro cm² Plattenfläche in der Basisplatte (1 ; 10) angeordnet sind.

7. Orthodonte Vorrichtung nach einem der Ansprüche 1 bis 6, **dadurch gekennzeichnet**, daß zwei oder mehr Ausnehmungen (21 ; 22) zu einer einander verschneidenden Gruppe (26 ; 27) zusammengefaßt sind.

8. Orthodonte Vorrichtung nach Anspruch 7, **dadurch gekennzeichnet**, daß der Schnittpunkt der Mittelachsen einander verschneidender Ausnehmungen (21 ; 22) in der Ebene der Unterseite (20) der Basisplatte (1 ; 10) liegt.

9. Orthodonte Vorrichtung nach Anspruch 7, **dadurch gekennzeichnet**, daß der Schnittpunkt der Mittelachsen einander verschneidender Ausnehmungen (21 ; 22) in der Nähe der Kegelspitzen gelegen ist.

10. Orthodonte Vorrichtung nach einem der Ansprüche 1 bis 9, **dadurch gekennzeichnet**, daß die Ausnehmungen (21 ; 22) sich über 60-90%, insbesondere 75%, der Dicke der Basisplatte (1 ; 10) erstrecken.

## Claims

1. An orthodontic device in the form of a bracket with wings (2 ; 3 ; 11 ; 12 ; 13 ; 14) which are constructed in the form of separate preforms and are welded onto a base plate (1 ; 10) itself forming a separately preformed component part, characterised in that the wings (2 ; 3 ; 11 ; 12 ; 13 ; 14) form preforms which are cut individually out of a sheet bar by means of a laser cutting device, in their final shape and are connected to the base plate (1 ; 10) in fusion welding regions (18 ; 19) without welding flux, particularly fusion welding spots, the base plate (1 ; 10) is itself directly constructed in the form of a bonding base and for this purpose is provided with undercut recesses (21 ; 22) which are arranged distributed over its under side, are open towards its under side and are formed by laser-beam boreholes and which have the shape of a circular cone, the tip of which is adjacent to the top (23) of the base plate (1 ; 10) and the centre axis of which forms an acute angle of inclination (24 ; 25) with the under side of the base plate (1 ; 10), the recesses (21 ; 22) being differently aligned in groups.

2. An orthodontic device according to Claim 1, characterised in that the end faces (15, 16) of the wing (2 ; 3 ; 11 ; 12 ; 13 ; 14) extending perpendicularly to the longitudinal side faces (7, 8) have an inwardly curved rounding which is open to the outside and end in a foot region (17) which is at an acute angle to the under side of the wing.

3. An orthodontic device according to Claim 2, characterised in that the wings (2 ; 3 ; 11 ; 12 ; 13 ; 14) are welded to the base plate (1 ; 10) in their foot regions (17).

4. An orthodontic device according to any one of claims 1 to 3, characterised in that the wings (2 ; 3 ; 11 ; 12 ; 13 ; 14) and the base plate (1 ; 10) are connected in fusion weld regions (18, 19) formed by a laser welding operation.

5. An orthodontic device according to any one of Claims 1 to 4, characterised in that the angles of inclination (24 ; 25) of the centre axes of the recesses (21 ; 22) are 40-60°, particularly 50°.

6. An orthodontic device according to any one of Claims 1 to 5, characterised in that about 80-120 recesses (21 ; 22) are arranged in the base plate (1 ; 10) per cm² of plate area.

7. An orthodontic device according to any one of Claims 1 to 6, characterised in that two or more recesses (21 ; 22) are combined to form an intersecting group (26 ; 27).

8. An orthodontic device according to Claim 7, characterised in that the point of intersection of the centre axes of intersecting recesses (21 ; 22) lies in the plane of the under side (20) of the base plate (1 ; 10).

9. An orthodontic device according to Claim 7, characterised in that the point of intersection of the centre axes of intersecting recesses (21 ; 22) is situated in the vicinity of the apex of the cones.

10. An orthodontic device according to any one of Claims 1 to 9, characterised in that the recesses (21 ; 22) extend over 60-90%, particularly 75%, of the thickness of the base plate (1 ; 10).

**Revendications**

1. Dispositif orthodontique ayant la forme d'un appareil présentant des ailes (2 ; 3 ; 11 ; 12 ; 13 ; 14), qui sont constituées de pièces façonnées séparées et sont soudées sur une plaque de base (1 ; 10) constituant pour sa part une pièce individuelle préformée séparément, caractérisé en ce que les ailes (2 ; 3 ; 11 ; 12 ; 13 ; 14) constituent des pièces façonnées découpées individuellement à leur forme finale, à partir d'une plaque, à l'aide d'un dispositif de coupe à laser et sont unies à la plaque de base (1 ; 10) dans des domaines, en particulier des points, (18 ; 19) de soudage par fusion sans agent de soudage, la plaque de base (1 ; 10) constituant elle-même immédiatement la base de collage et étant pourvue, à cet effet, d'évidements (21 ; 22) formés par forage au rayon laser, qui sont répartis sur sa face inférieure et sont des creux ouverts vers la face inférieure, qui ont la forme d'un cône de révolution dont le sommet est orienté vers la face supérieure (23) de la plaque de base (1 ; 10) et dont l'axe central forme, avec la face inférieure de la plaque de base (1 ; 10), un angle d'inclinaison aigu (24 ; 25), les évidements (21 ; 22) présentant, par groupe, des orientations différentes.

2. Dispositif orthodontique suivant la revendication 1, caractérisé en ce que les faces d'about (15 ; 16) de l'aile (2 ; 3 ; 11 ; 12 ; 13 ; 14) qui s'étendent perpendiculairement aux faces latérales longitudinales (7, 8) présentent un arrondi bombé vers l'intérieur et ouvert vers l'extérieur et se terminent par un domaine de base (17) formant un angle aigu avec la face inférieure de l'aile.

3. Dispositif orthodontique suivant la revendication 2, caractérisé en ce que les ailes (2 ; 3 ; 11 ; 12 ; 13 ; 14) sont soudées à la plaque de base (1 ; 10) dans leur domaine de base (17).

4. Dispositif orthodontique suivant l'une quelconque des revendications 1 à 3, caractérisé en ce que les ailes (2 ; 3 ; 11 ; 12 ; 13 ; 14) et la plaque de base (1 ; 10) sont unies dans des domaines de soudage par fusion (18 ; 19) formés par un processus de soudage à laser.

5. Dispositif orthodontique suivant l'une quelconque des revendications 1 à 4, caractérisé en ce que les angles d'inclinaison (24 ; 25) des axes centraux des évidements (21 ; 22) sont de 40 à 60° et, en particulier, de 50°.

6. Dispositif orthodontique suivant l'une quelconque des revendications 1 à 5, caractérisé en ce qu'il y a environ 80 à 120 évidements (21 ; 22) par cm² d'aire superficielle de la plaque de base (1 ; 10).

7. Dispositif orthodontique suivant l'une quelconque des revendications 1 à 6, caractérisé en ce que deux ou plus de deux évidements (21 ; 22) sont réunis en un groupe à intersection réciproque (26 ; 27).

8. Dispositif orthodontique suivant la revendication 7, caractérisé en ce que le point d'intersection des axes centraux d'évidements (21 ; 22) qui se coupent est situé dans le plan de la face inférieure (20) de la plaque de base (1 ; 10).

9. Dispositif orthodontique suivant la revendication 7, caractérisé en ce que le point d'intersection des axes centraux d'évidements (21 ; 22) qui se coupent est situé à proximité des sommets de cônes.

10. Dispositif orthodontique suivant l'une quelconque des revendications 1 à 9, caractérisé en ce que les évidements (21 ; 22) s'étendent sur 60 à 90%, en particulier sur 75%, de l'épaisseur de la plaque de base (1 ; 10).

# Fig.1

# Fig.2

Fig.3

Fig.4

Fig.5

Fig.6

7

# F i g.7

# F i g.8

# F i g.9